# EUROPEAN PATENT APPLICATION

(11) **EP 3 270 341 A1**
(43) Date of publication of application: **17.01.2018**
(21) Application number: 16189863.0
(22) Date of filing: 21.09.2016
(51) Int. Cl.: G06Q 10/08, G06Q 10/10, G06Q 50/12

(54) **SYSTEM AND METHOD FOR ISSUING KEY FOR DOOR LOCK AT LODGING FACILITIES USING SMART PHONE**

(30) Priority: 15.07.2016 KR 20160089909
(71) Applicant: Urban Design Idea Associates Co., Ltd, Seoul 06664 (KR)
(72) Inventor: CHOI, Jeong Youn, 06664 Seoul (KR)
(74) Representative: Vossius & Partner Patentanwälte Rechtsanwälte mbB

(57) **Abstract**

Disclosed are a system and method of issuing a key for a door lock at lodging facilities using a smart phone. The system includes: a guest smart phone that makes a request for a reservation and payment at lodging facilities, is issued a key for a door lock when the payment is completed, and performs Bluetooth-communication with the door lock at the lodging facilities using the issued key to open a door; a door-lock key issuing server that is requested to make a reservation and payment from the guest smart phone, acts as a proxy to make the reservation and payment at the lodging facilities, issues a key for a door lock with an expiration date corresponding to a predetermined stay, which is valid until the expiration date, to the guest smart phone when the reservation and payment are approved, and provides a password of the key for the door lock to the lodging facilities in real time; and a lodging-facilities server that approves the reservation and payment made by the door-lock key issuing server, receives the password of the key for the door lock from the door-lock key issuing server, approves the smart phone when accessed by the smart phone, and permits the door to be open by the Bluetooth communication with the approved smart phone. In the foregoing system and method of issuing a key for a door lock at lodging facilities using the smart phone, a guest can be remotely issued a key for a door lock of a room using the smart phone while reserving the room at the lodging facilities, and thus directly open and close the door of the room without checking in or out at the front desk, and it is very convenient for him/her since there are no needs of receiving and returning a key for a door lock.

## Description

### CROSS-REFERENCE TO RELATED APPLICATION

This application claims priority from Korean Patent Application No. 10-2016-0089909, filed on July 15, 2016 in the Korean Intellectual Property Office, the disclosure of which is incorporated herein by reference.

### BACKGROUND OF THE INVENTION

### (a) Field of the Invention

The present invention relates to a system and method of issuing a key for a door lock at lodging facilities, and more particularly to a system and method of issuing a key for a door lock at lodging facilities using a smart phone.

### (b) Description of the Related Art

A user checks in and out at a hotel and the like lodging facilities. At this time, a user has to perform various and complicated procedures of receiving or returning a key for a door lock of a room, making or canceling credit card payment a deposit on the room, etc.

Sometimes, it is difficult for a user to be in time for transportation since s/he has to wait for a considerably long time to follow such complicated procedures.

If a user can more easily check in and out, if there are no needs of waiting for a long time on a front desk to follow the procedures and if there are no needs of receiving or returning the key for the door lock of the room, it will be very convenient for him/her.

Conventionally, there have been proposed a lot of arts using a smart phone to remotely open and close a door lock. Korean Patent No. 10-1526142 and Korean Patent Publication No. 10-2014-0115631 disclose the arts of using the smart phone to open and close the door lock.

However, the related arts are applicable in remotely opening and closing a private dwelling space, and not suitable to be applicable to a hotel or the like lodging facilities. Further, the lodging facilities have difficulties in giving permission for remote control since guests are changed every a short time of few days.

### SUMMARY OF THE INVENTION

Accordingly, the present invention is conceived to solve the foregoing problems, and an aspect of the present invention is to provide a system for issuing a key for a door lock at lodging facilities using a smart phone.

Another aspect of the present invention is to provide a method of issuing a key for a door lock at lodging facilities using a smart phone.

In accordance with an embodiment of the present invention, there is provided a system for issuing a key for a door lock at lodging facilities, the system including: a guest smart phone that makes a request for a reservation and payment at lodging facilities, gets an issued key for a door lock when the payment is completed, and performs Bluetooth-communication with the door lock at the lodging facilities using the issued key to open a door; a door-lock key issuing server that is requested to make a reservation and payment from the guest smart phone, acts as a proxy to make the reservation and payment at the lodging facilities, issues a key for a door lock with an expiration date corresponding to a predetermined stay, which is valid until the expiration date, to the guest smart phone when the reservation and payment are approved, and provides a password of the key for the door lock to the lodging facilities in real time; and a lodging-facilities server that approves the reservation and payment made by the door-lock key issuing server, receives the password of the key for the door lock from the door-lock key issuing server, approves the smart phone when accessed by the smart phone, and permits the door to be open by the Bluetooth communication with the approved smart phone.

Here, the lodging-facilities server may receive access information from the door lock in real time when a master key is used to have an access to the door lock, and transmit the received access information to the guest smart phone in real time.

In accordance with another embodiment of the present invention, there is provided a method of issuing a key for a door lock at lodging facilities, the method including: by a guest smart phone, making a request for a reservation and payment at lodging facilities to a door-lock key issuing server; by the door-lock key issuing server, acting as a proxy to make the reservation and payment at the lodging facilities; by the door-lock key issuing server, issuing a key for a door lock with an expiration date corresponding to a predetermined stay, which is valid until the expiration date, to the guest smart phone when the reservation and payment are approved by the lodging facilities, and providing a password of the key for the door lock to the lodging facilities; and by the guest smart phone, receiving and storing the issued key for the door lock from the door-lock key issuing server, and having an access to and being approved by the lodging-facilities server; and by the guest smart phone, performing Bluetooth-communication with the door lock and being permitted to open a door;

The issuing the key for the door lock may further include: by the lodging-facilities server, transmitting access information to the guest smart phone in real time when a master key is used to have an access to the door lock; and by the guest smart phone, receiving and outputting the access information.

### BRIEF DESCRIPTION OF THE DRAWINGS

The above and/or other aspects of the present invention will become apparent and more readily appreciated from the following description of the exemplary embodiments, taken in conjunction with the accompanying drawings, in which:
FIG. 1 is a block diagram showing a system for issuing a key for a door lock at lodging facilities using a smart phone according to an embodiment of the present invention; and
FIG. 2 is a flowchart showing a method of issuing a key for a door lock at lodging facilities using a smart phone according to an embodiment of the present invention.

### DETAILED DESCRIPTION OF THE EMBODIMENTS

In the present invention, various modifications may be applied and various embodiments may be realized, and thus specific embodiments will be exemplified in the drawings and be described in detail in the specification. However, the present invention is not limited to specifically disclosed forms, and should be construed to include all modifications, equivalents, and replacements without departing from the spirit and technical scope of the present invention.

Below, exemplary embodiments of the present invention will be described with reference to accompanying drawings.

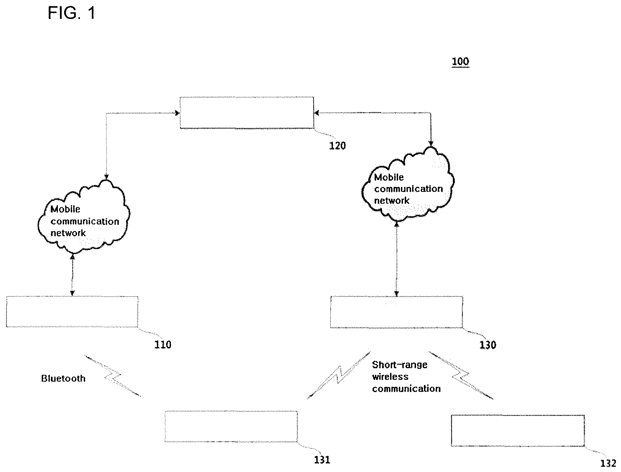

FIG. 1 is a block diagram showing a system for issuing a key for a door lock at lodging facilities using a smart phone according to an embodiment of the present invention.

Referring to FIG. 1, a system 100 for issuing a key for a door lock at lodging facilities using a smart phone according to an embodiment of the present invention includes a guest smart phone 110, a door-lock key issuing server 120 and a lodging-facilities server 130.

The door-lock key issuing system 100 may be configured to deputize for a guest at remote places to reserve a room for him/her with regard to many lodging facilities, and previously issue the guest smart phone 110 with a key for a door lock of the reserved room.

Here, the key for the door lock may be issued with an expiration date corresponding to a stay and thus valid until the expiration date.

Further, the door-lock key issuing server 120 randomly generates a key for a door lock and offers it to the lodging-facilities server 130, and the lodging-facilities server 130 applies the received key for the door lock to the door lock 131, thereby preventing the key for the door lock from being exposed or stolen.

In addition, a messaging service is provided between the guest smart phone 110 and a front-desk terminal 132, and the messaging service includes a real-time translation function to be convenient for a guest.

Below, details will be described.

The guest smart phone 110 may be configured to remotely make a request for a reservation and payment at lodging facilities to the door-lock key issuing server 120 when an application previously installed in the guest smart phone 110 is executed,

The door-lock key issuing server 120 may be configured to make not only a reservation but also payment at many previously registered lodging facilities. The door-lock key issuing server 120 may be requested by the guest smart phone 110 to make a reservation and payment for lodging, and act as a proxy to make a reservation and payment at the lodging facilities.

At this time, the lodging-facilities server 130 of the lodging facilities receives the requests from the door-lock key issuing server 120 acting as a proxy to make the reservation and payment, checks an available room, approves of the payment, and feeds the reservation and payment back to the door-lock key issuing server 120.

The door-lock key issuing server 120 may be configured to receive the approval to the reservation and payment at the lodging facilities from the lodging-facilities server 130 and generate a key for a door lock of a room at the corresponding lodging facilities. Here, the key for the door lock may be encrypted with a password set for the door lock 131.

The door-lock key issuing server 120 may be configured to randomly generate a key for a door lock without using the password previously set for the door lock 131. Further, the door-lock key issuing server 120 may be configured to send the generated key for the door lock to the lodging-facilities server 130.

In addition, the door-lock key issuing server 120 may be configured to issue a key for a door lock with an expiration date so that the key for the door lock can be valid during a stay corresponding to a reservation.

The guest smart phone 110 may be configured to receive and store a key for a door lock of a reserved room at lodging facilities from the door-lock key issuing server 120. The key for the door lock may be stored as it is encrypted.

Since it is possible to remotely make the reservation and payment for the lodging and be issued a key for a door lock, a guest does not have to follow check-in procedures such as checking in at a front desk to receive the key for the door lock.

Thus, a guest can use the key for the door lock, stored in the guest smart phone 110, to get approval from the lodging-facilities server 130 with respect to the door lock 131 of the reserved room, and then have an access to the door lock 131 through Bluetooth communication of the guest smart phone 110, thereby opening the door of the room.

When a guest first accesses the door lock through the guest smart phone 110 and the door is thus opened, the door lock 131 transmits an access signal to the lodging-facilities server 130 in real time, thereby automatically checking-in at the lodging facilities.

Here, the door lock 131 and the lodging-facilities server 130 may communicate with each other through Wi-Fi or the like short-range wireless communication.

In result, a hotel manager does not have to set passwords for door locks one by one.

The door lock 131 may be configured to transmit information about a guest's accesses to the door lock 131 using the guest smart phone 110 to the lodging-facilities server 130 in real time, and the lodging-facilities server 130 may be configured to back up and store this access information. Further, the front-desk terminal 132 may be configured to ask the lodging-facilities server 130 for the access information of each room and monitor whether a guest arrives at or leaves the room in real time.

Further, the guest smart phone 110 may make a request for room cleaning by accessing the lodging-facilities server 130 through the application while leaving the room, or may transmit other requests such as a room service or questions through the messaging service.

The front-desk terminal 132 may receive the requests for the room cleaning, the room service, the questions or the like from the previously registered guest smart phone 110 and respond to the requests in real time or offer the service directly.

If a guest is a foreigner, s/he may have difficulties in language and communication. Thus, a real-time translation messaging service is offered to solve a problem of language and communication with a foreign guest.

Accordingly, not only the check-in/out procedures but also other necessary request or questions are conveniently communicated and serviced.

Since a hotel deposit is also easily payed or canceled through the application, a guest rarely uses the front desk and it is thus convenient for him/her.

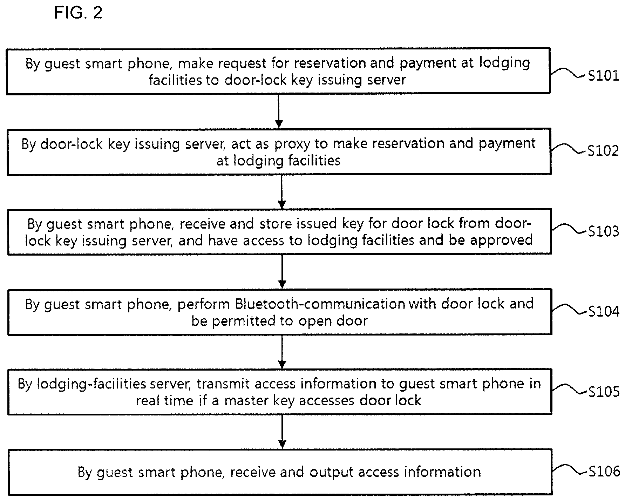

FIG. 2 is a flowchart showing a method of issuing a key for a door lock at lodging facilities using a smart phone according to an embodiment of the present invention.

Referring to FIG. 2, the guest smart phone 110 makes a request for a reservation and payment at lodging facilities to the door-lock key issuing server 120(S101).

Next, the door-lock key issuing server 120 acts as a proxy to make a reservation and payment at the lodging facilities (S102).

Next, if the reservation and payment from the lodging facilities are approved, the door-lock key issuing server 120 issues a key for a door lock of a room at the corresponding lodging facilities with an expiration date corresponding to a stay, transmits it to the guest smart phone 110, and transmits a password of the key for the door lock to the lodging-facilities server 130.

Next, the guest smart phone 110 receives and stores the key issued for the door lock from the door-lock key issuing server 120, and has an access to and is approved by the lodging-facilities server 130 through the application (S103).

Next, the guest smart phone 110 communicates with the door lock 131 through Bluetooth communication and is permitted to open the door (S104). Alternatively, the guest smart phone 110 may communicate with the door lock 131 through various short-range communications, e.g. near field communication (NFC).

By the way, if a master key accesses the door lock 131, the lodging-facilities server 130 transmits this access information to the guest smart phone 110 in real time (S105).

Next, the guest smart phone 110 receives and outputs this access information (S106).

In the foregoing system and method of issuing a key for a door lock at lodging facilities using the smart phone, a guest can be remotely issued a key for a door lock of a room using the smart phone while reserving the room at the lodging facilities, and thus directly open and close the door of the room without checking in or out at the front desk. Since there are no needs of receiving and returning a key for a door lock, it is very convenient.

Further, the messaging service between the smart phone and the front desk is convenient to send information about necessaries, requests and questions and offer services.

In particular, the translation messaging service is convenient for a foreign guest who has difficulties in language and communication, thereby having an effect on solving communication problems.

Although a few exemplary embodiments of the present invention have been shown and described, it will be appreciated by those skilled in the art that changes may be made in these embodiments without departing from the principles and spirit of the invention, the scope of which is defined in the appended claims and their equivalents.

## Claims

1. A system for issuing a key for a door lock at lodging facilities, the system comprising:
a guest smart phone that makes a request for a reservation and payment at lodging facilities, gets an issued key for a door lock when the payment is completed, and performs Bluetooth-communication with the door lock at the lodging facilities using the issued key to open a door;
a door-lock key issuing server that is requested to make a reservation and payment from the guest smart phone, acts as a proxy to make the reservation and payment at the lodging facilities, issues a key for a door lock with an expiration date corresponding to a predetermined stay, which is valid until the expiration date, to the guest smart phone when the reservation and payment are approved, and provides a password of the key for the door lock to the lodging facilities in real time; and
a lodging-facilities server that approves the reservation and payment made by the door-lock key issuing server, receives the password of the key for the door lock from the door-lock key issuing server, approves the smart phone when accessed by the smart phone, and permits the door to be open by the Bluetooth communication with the approved smart phone.

2. The system according to claim 1, wherein the lodging-facilities server receives access information from the door lock in real time when a master key is used to have an access to the door lock, and transmits the received access information to the guest smart phone in real time.

3. A method of issuing a key for a door lock at lodging facilities, the method comprising:
by a guest smart phone, making a request for a reservation and payment at lodging facilities to a door-lock key issuing server;
by the door-lock key issuing server, acting as a proxy to make the reservation and payment at the lodging facilities;
by the door-lock key issuing server, issuing a key for a door lock with an expiration date corresponding to a predetermined stay, which is valid until the expiration date, to the guest smart phone when the reservation and payment are approved by the lodging facilities, and providing a password of the key for the door lock to the lodging facilities; and
by the guest smart phone, receiving and storing the issued key for the door lock from the door-lock key issuing server, and having an access to and being approved by the lodging-facilities server;
by the guest smart phone, performing Bluetooth-communication with the door lock and being permitted to open a door;

4. The method according to claim 3, further comprising:
by the lodging-facilities server, transmitting access information to the guest smart phone in real time when a master key is used to have an access to the door lock; and
by the guest smart phone, receiving and outputting the access information.
